# EUROPÄISCHE PATENTSCHRIFT

(11) **EP 1 123 529 B1**
(45) Veröffentlichungstag und Bekanntmachung des Hinweises auf die Patenterteilung: **12.10.2011**
(21) Anmeldenummer: 00965895.6
(22) Anmeldetag: 24.08.2000
(51) Int. Cl.: G02F 1/141, G02F 1/21

(54) **VORRICHTUNG UND VERFAHREN ZUM TEMPERATURUNABHÄNGIGEN BETRIEB VON ELEKTROOPTISCHEN SCHALTERN AUF DER GRUNDLAGE FERROELEKTRISCHER FLÜSSIGKEITSKRISTALLE MIT DEFORMIERTER HELIX**
DEVICE AND METHOD FOR CARRYING OUT A TEMPERATURE-INDEPENDENT OPERATION OF ELECTRO-OPTICAL SWITCHES BASED ON FERROELECTRIC LIQUID CRYSTALS HAVING A DEFORMED HELIX
PROCEDE ET DISPOSITIF POUR FAIRE FONCTIONNER DE MANIERE VARIABLE AVEC LA TEMPERATURE DES COMMUTATEURS ELECTRO-OPTIQUES A BASE DE CRISTAUX LIQUIDES FERROELECTRIQUES A STRUCTURE HELICOIDALE DEFORMEE

(30) Priorität: 30.08.1999 DE 19941079
(43) Veröffentlichungstag der Anmeldung: 16.08.2001
(73) Patentinhaber: Deutsche Telekom AG, 53113 Bonn (DE)
(72) Erfinder: DULTZ, Wolfgang, 65936 Frankfurt am Main (DE); GANZKE, Dirk, 64285 Darmstadt (DE); HAASE, Wolfgang, 64354 Reinheim (DE); POZHIDAEV, Eugene, 127322 Moskau (RU)
(86) Internationale Anmeldenummer: PCT/EP2000/008261
(87) Internationale Veröffentlichungsnummer: WO 2001/016647

(56) Entgegenhaltungen:
- EP-A- 0 356 730
- DE-A- 4 303 335
- FUENFSCHILLING J ET AL: "PERFORMANCE OF CONVENTIONAL AND NOVEL DEFORMED HELIX FERROELECTRIC LIQUID CRYSTAL DISPLAY OPERATING MODES" JAPANESE JOURNAL OF APPLIED PHYSICS,JP,PUBLICATION OFFICE JAPANESE JOURNAL OF APPLIED PHYSICS. TOKYO, Bd. 35, Nr. 11, PART 01, 1. November 1996 (1996-11-01), Seiten 5765-5774, XP000618145 ISSN: 0021-4922
- ABDULHALIM I ET AL: "ELECTRICALLY AND OPTICALLY CONTROLLED LIGHT MODULATION AND COLOR SWITCHING USING HELIX DISTORTION OF FERROELECTRIC LIQUID CRYSTALS" MOLECULAR CRYSTALS AND LIQUID CRYSTALS (INC. NONLINEAR OPTICS ),GB,GORDON AND BREACH SCIENCE PUBLISHERS, READING, Bd. 200, 1. Mai 1991 (1991-05-01), Seiten 79-101, XP000258405
- POZHIDAEV E ET AL: "High frequency and high voltage mode of deformed helix ferroelectric liquid crystals in a broad temperature range" SEVENTH INTERNATIONAL CONFERENCE ON FERROELECTRIC LIQUID CRYSTALS, DARMSTADT, GERMANY, 29 AUG.-3 SEPT. 1999, Bd. 246, Nr. 1-4, Seiten 1141-1151, XP000974877 Ferroelectrics, 2000, Gordon & Breach, Switzerland ISSN: 0015-0193

## Beschreibung

Die Erfindung betrifft eine Vorrichtung nach dem Oberbegriff des Anspruchs 1 und ein Verfahren nach dem Oberbegriff des Anspruchs 6 zum temperaturunabhängigen Betrieb von elektrooptischen Schaltern auf der Grundlage ferroelektrischer Flüssig kristalle mit deformierter Helix.

Optische Flüssig kristalle haben seit fast 20 Jahren die Displaytechnik grundlegend verändert. Als preiswerte und sparsame Lichtventile dienen sie aber insbesondere auch zur Schaltung optischer Nachrichtenflüsse. Durch die Entwicklung der ferroelektrischen Flüssigkristalle sind die Schaltzeiten in den Bereich von Mikrosekunden gerückt worden. Schwierigkeiten macht aber nach wie vor die hohe Temperaturabhängigkeit der meisten physikalischen Parameter eines Flüssigkristalls. In vielen technischen Geräten müssen die Bauelemente in einem weiten Temperaturbereich, die gleichen Eigenschaften aufweisen. Besonders im Fahrzeugbau werden dabei Temperaturen von -30° C bis +80° C als Vorgaben genannt. Auch optische Überlastungsschalter von Videoüberwachungssystemen im Freien können diesen Temperaturen ausgesetzt sein.

Beispiele für weitere Anwendungen sind doppelbrechende Interferenzfilter, die mit Hilfe von Flüssigkristallen spektral abgestimmt werden (C. BARTA, et al., Kristalloptisches Interferenzfilter Europäisches Patent 0 907 089 A2).

Auch sog. optisch oder elektrisch adressierbare ortsauflösende Flüssigkristallmodulatoren (OASLM, EASLM), die zur Umwandlung von inkohärenter Bildinformation in kohärente Bildinformation dienen, können bisher nur in engen Temperaturbereichen betrieben werde, da sich deren Schaltzeiten mit der Temperatur sehr stark ändern.

Beispielsweise in "Electrically and Optically controlled Light Modulation and Color Switching Using Helix Distortion of Ferroelectrioc Liquid Crystals" von I. Abdulhalim et al., Mol. Cryst. Liq. Cryst. 1991, Vol. 200, Seiten 79 bis 101, wird ein auf der sogenannten DHF-Mode (Distorted helix ferroelectric mode) basierender OASLM (Optically addressed spatial light modulator) beschrieben.

Der Erfindung liegt folglich die Aufgabe zu Grunde, die vorstehend beschriebenen Nachteile zu mildern und insbesondere eine Vorrichtung und ein Verfahren bereitzustellen, bei welchem temperaturabhängige Einflüsse bei gleichzeitig hohen Schaltzeiten stark vermindert sind.

Diese Aufgabe wird durch ein Verfahren mit den Merkmalen des Anspruchs 1 gelöst.

Gemäß der Erfindung wird ein Verfahren bereitgestellt, bei welchem ferroelektrische Flüssigkristalle eine im weitem Bereich temperaturunabhängige und sehr geringe Schaltzeit haben und somit besonders vorteilhaft für optische Schalter im Freien und in Fahrzeugen eingesetzt werden können.

Gemäß der Erfindung wird vorteilhaft ein optischer Flüsigkristallmodulator verwendet, bei welchem die ferroelektrischen Flüssigkristalle eine DHF-Mode haben und in einem Bereich des elektrischen Feldes von mehr als 20V/µm betrieben werden. Dadurch besitzt der Modulator in einem Frequenzbereich, der im wesentlichen oberhalb von 50 kHZ liegt, eine temperaturunabhängige und äußerst niedrige Ansprechzeit.

Die Erfindung wird nachfolgend anhand bevorzugter Ausführungsbeispiele und unter Bezugnahme auf die beigefügten Zeichnungen detaillierter beschrieben.

### Es zeigen:

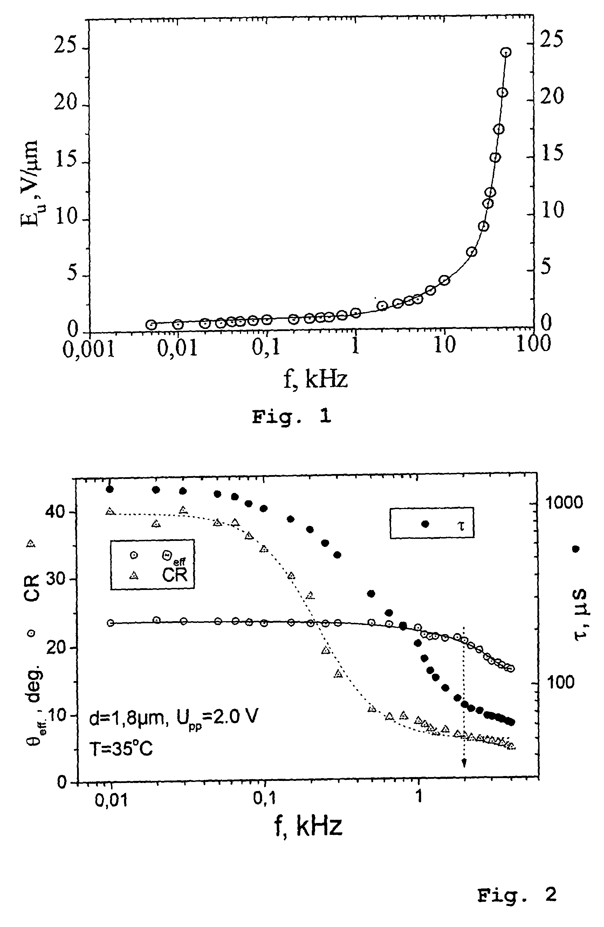

- Figur 1:: Die Abhängigkeit des elektrischen Feldes E_{c}, das zur vollständigen Aufwindung der Helix nötig ist, von der Schaltfrequenz f bei T = 20.0°C wobei die Messung an einer 2,0 µm dicken Zelle an der flüssigkristallinen Mischung FLC-388 durchgeführt wurde und die Helixganghöhe Po bei einer Temperatur T = 20.0°C den Wert von 0,22 µm hatte,
- Figur 2:: Die Abhängigkeit der Schaltzeit τ des effektiven Tiltwinkels θ_{eff} und des Kontrastverhältnisses CR von der Frequenz des elektrischen Feldes. Schichtdicke d=1,8 µm, 20 V_{pp'} T=35°C,

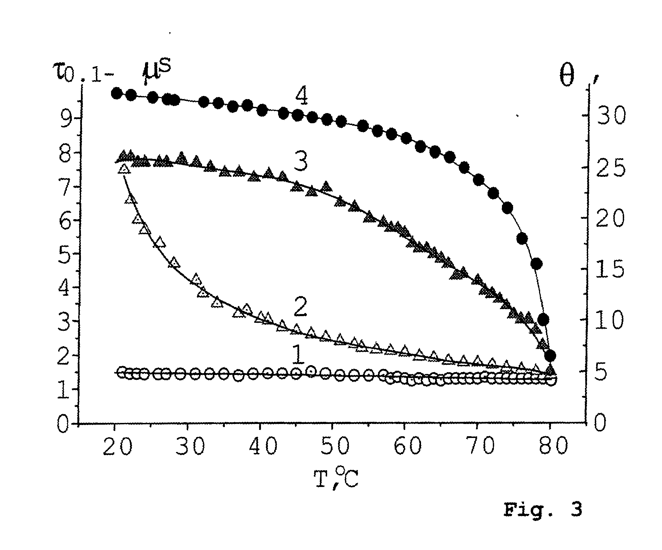

- Figur 3:: Die Temperaturabhängigkeit der Schaltzeit τ_{0,1-0,9} im DHF Mode bei einer Frequenz f = 130kHz und E = ±15 V/µgm (Kurve 1) und beim Schalten des vollständig entwundenen Zustandes (E > Eᵤ) bei f=10 kHz und E=±15 V/µm (Kurve 2), die Temperaturabhängigkeit des Tiltwinkels θ im DHF Mode bei f = 130 kHz und E = ±15 V/µm (Meßkurve 3) und im entwundenen Zustand bei f = 10 kHz und E = ± 15 V/µm (Kurve 4).

### Detaillierte Beschreibung der Erfindung

Die Erfindung verwendet ferroelektrische Flüssigkristalle zur Modulation von Licht in Flüssigkristallmodulatoren, deren Aufbau, insbesondere deren äußere, insbesondere aus transparentem Material bestehende Elektroden und deren Zellen dem Fachmann auf diesem Gebiet wohlbekannt sind, weshalb eine detailliertere Beschreibung des mechanischen und elektrischen Aufbaus sich erübrigt.

Es werden ferroelektrische Flüssigkristalle verwendet, deren Helix eine geringe Ganghöhe (< 300 µm) aufweist und sich mit einem geringen elektrischen Feld kontinuierlich deformiert läßt (sog. DHF-Mode). Dieser DHF Mode ermöglicht eine kontinuierliche Variation des effektiven Tiltwinkels θ_{eff} und der effektiven Doppelbrechung Δη_{eff} bei geringen Spannungen (< 5V) und geringen Schaltzeiten (< lms). Die Größe des effektiven Tiltwinkels ist gleich des halben Drehungwinkels der Indikatrix des Flüssigkristalls im elektrischen Feld; das heißt, je größer der effektive Tiltwinkel ist, um so stärker dreht sich die Indikatrix des Flüssigkristalls.

Da optische Flüssigkristallmodulatoren auf der Basis der DHF-Mode als Lambda/2 Vergrößerungsplatten ausgebildet werden, die sich im elektrischen Feld drehen, sind bei einmaligem Durchgang durch die Platte Tiltwinkel von ± 22.5 Grad notwendig, um eine vollständige Auslöschung von polarisiertem Licht im Schaltzustand "AUS" und vollständige Transparenz im Schaltzustand "EIN" zu erhalten.

Das elektrische Feld E_{U}, das durch vollständige Aufwindung der Helix erforderlich ist und dabei den gewünschten Tiltwinkel hervorruft, ist bei kleinen Frequenzen relativ klein (Figur 1; E_{U~}0,5 bis 1 V/µm bei Frequenzen f kleiner 1 kHz). Mit höheren Frequenzen nimmt diese Grenzfeldstärke zu; außerdem sinkt auch der Tiltwinkel, siehe Figuren 1 und 2.

Bei Frequenzen über 50 kHz sind Felder E_{U}> 20 V/µm zur vollständigen Entwindung der Helix notwendig. Die Region in der sich der DHF-Effekt ausnutzen läßt wird somit zu höheren Feldern hin verschoben.

Da höhere Felder wegen der höheren Spannungen am Flüssigkristall nachteilig sind und außerdem zu kleineren Tiltwinkeln führen, wurde dieser Bereich bisher nicht als technisch interessant angesehen.

Figur 1 zeigt die Abhängigkeit des elektrischen Feldes E_{c}, das zur vollständigen Aufwindung der Helix nötig ist, von der Schaltfrequenz f bei T = 20.0°C. Die Messung wurde an einer 2,0 µm dicken Zelle an einer selbsthergestellten flüssigkristallinen Mischung FLC-388 durchgeführt. Die Helixganghöhe Po beträgt = 0,22 µm bei einer Temperatur von T = 20.0° C.

Ferner kann die Helixganghöhe Po bei einer Temperatur von ungefähr T = 20.0°C, d.h. bei etwa Raumptemperatur in einem Bereich von 0,1 bis 0,5 liegen.

Mit höheren Frequenzen wird die Ansprechzeit τ aber um über mehr als eine Größenordnungen gesenkt, während der Tiltwinkel θ bis zu sehr hohen Frequenzen nahezu konstant bleibt (Figur 2). Mit der Schaltzeit sinkt damit zwar auch das Kontrastverhältnis und die Doppelbrechung, aber es werden immer noch für Anwendungen akzeptable Werte erreicht.

Figur 2 zeigt die Abhängigkeit der Schaltzeit τ des effektiven Tiltwinkels θ_{eff} und des Kontrastverhältnisses CR von der Frequenz des elektrischen Feldes bei einer Schichtdicke d = 1,8 µm und 20 Vₚₚ sowie einer Temperatur von T = 35°C.

Figur 3 zeigt als Beispiel eine Messung der Ansprechzeit τ in Abhängigkeit von der Temperatur für ein solches Flüssigkristallsystem. Während die Ansprechzeit τ für einen Betrieb des Flüssigkristalls bei 10 kHz stark temperaturabhängig ist (Kurve 2), ist sie bei einer Betriebsfrequenz von 130 kHz nicht nur sehr klein, sondern auch absolut temperaturkonstant (Kurve 1). Der effektive Tiltwinkel ändert sich dabei nur wenig und auch die Temperaturabhängigkeit (Kurve 3 + 4) ist erst über 50°C nicht mehr zu vernachlässigen.

Durch eine weitergehende Optimierung der Mischungen ließe sich gemäß der Erfindung erwartungsgemäß ein schneller Flüssigkeitskristallschalter für einen Anwendungsbereich von -20 bis 80° C entwickeln.

## Patentansprüche

1. Verfahren zum Betrieb eines optischen, in DHF-Mode betriebenen Flüssigkristallmodulators, welcher zumindest einen ferrolektrischen Flüssigkristall umfaßt, wobei die ferroelektrischen Flüssigkristalle eine DHF-Mode haben, **dadurch gekennzeichnet, dass** die ferroelektrischen Flüssigkristalle in einem Betriebsbereich des elektrischen Feldes am Ort des Flüssigkristalls von mehr als 20 V/µm betrieben werden.

2. Verfahren zum Betrieb eines optischen Flüssigkristallmodulators nach Anspruch 1,
**dadurch gekennzeichnet,**
**daß** der Flüssigkristallmodulator mit der DHF-Mode als Lambda/2 Vergrößerungsplatten verwendet wird, welche sich im elektrischen Feld drehen und bei einmaligem Durchgang durch die Platte Tiltwinkel von 1 22.5 Grad erzeugt werden.

3. Verfahren zum Betrieb eines optischen Flüssigkristallmodulators nach Anspruch 1 oder 2, **dadurch gekennzeichnet,**
**daß** ein Flüssigkristall verwendet wird, bei welchem die Helixganghöhe Po bei einer Temperatur von ungefähr T = 20.0° C in einem Bereich von 0,1 µm bis 0,5 µm liegt.

4. Verfahren zum Betrieb eines optischen Flüssigkristallmodulators nach Anspruch 3, **dadurch gekennzeichnet,**
**daß** ein ferroelektrischer Flüssigkristall verwendet wird, bei welchem die Helixganghöhe Po bei einer Temperatur von ungefähr T - 20.0° C bei etwa 0,22 µm liegt.

5. Verfahren zum Betrieb eines optischen Flüssigkristallmodulators nach einem der vorstehenden Ansprüche, **dadurch gekennzeichnet,**
**daß** die Ansteuerungsfrequenz der Ansteuerungsspannung des Flüssigkristallmodulators wenigstens 10 kHz beträgt und bevorzugt oberhalb von 50 kHz liegt.

## Claims

1. Method for operating a liquid crystal optical modulator operated in DHF mode, which comprises at least one ferroelectric liquid crystal, wherein the ferroelectric liquid crystals have a DHF mode, **characterized in that** the ferroelectric liquid crystals are operated in an operating range of the electric field at the location of the liquid crystal of more than 20 V/µm:

2. Method for operating a liquid crystal optical modulator according to claim 1, **characterized in that** the liquid crystal modulator with the DHF mode is used as lambda/2 magnification plates which rotate in the electric field and with which tilt angles of ± 22.5 degrees are generated with a single pass through the plate.

3. Method for operating a liquid crystal optical modulator according to claim 1 or 2, **characterized in that** a liquid crystal is used in which the helix pitch Po at a temperature of approximately T = 20.0° C is in a range from 0.1µm to 0.5 µm.

4. Method for operating a liquid crystal optical modulator according to claim 3, **characterized in that** a ferroelectric liquid crystal is used in which the helix pitch Po at a temperature of approximately T = 20.0° C is about 0.22 µm.

5. Method for operating a liquid crystal optical modulator according to any one of the preceding claims, **characterized in that** the drive frequency of the drive voltage of the liquid crystal modulator is at least 10 kHz and preferably is above 50 kHz.

## Revendications

1. Procédé pour faire fonctionner un modulateur optique à cristaux liquides fonctionnant en mode DHF et comprenant au moins un cristal liquide ferroélectrique, les cristaux liquides ferroélectriques disposant d'un mode DHF, **caractérisé en ce que** les cristaux liquides ferroélectriques fonctionnent dans une plage de fonctionnement du champ électrique à l'emplacement du cristal liquide de plus de 20 V/µm.

2. Procédé pour faire fonctionner un modulateur optique à cristaux liquides selon la revendication 1, **caractérisé en ce que** le modulateur à cristaux liquides avec le mode DHF est utilisé comme plaques d'agrandissement Lambda/2 tournants dans le champ électrique et **en ce que** des angles tilts de ± 22,5 degrés sont générés au cours d'un passage unique à travers la plaque.

3. Procédé pour faire fonctionner un modulateur optique à cristaux liquides selon l'une des revendications 1 ou 2, **caractérisé en ce qu'**un cristal liquide est utilisé dont le pas hélicoïdal Po se situe dans une plage comprise entre 0,1 µm bis 0,5 µm pour une température d'environ T = 20,0 °C.

4. Procédé pour faire fonctionner un modulateur optique à cristaux liquides selon la revendication 3, **caractérisé en ce qu'**un cristal liquide ferroélectrique est utilisé dont le pas hélicoïdal Po est d'environ 0,22 µm pour une température d'environ T = 20,0 °C.

5. Procédé pour faire fonctionner un modulateur optique à cristaux liquides selon l'une des revendications précédentes, **caractérisé en ce que** la fréquence de commande de la tension de commande du modulateur à cristaux liquides est d'au moins 10 kHz et, de préférence, supérieur à 50 kHz.
